# EUROPÄISCHE PATENTANMELDUNG

(11) **EP 0 989 724 A2**
(43) Veröffentlichungstag der Anmeldung: **29.03.2000**
(21) Anmeldenummer: 99118089.4
(22) Anmeldetag: 24.09.1999
(51) Int. Cl.: H04M 11/02

(54) **Telekommunikationssystem mit einem als Türsprecheinrichtung ausgebildetem Endgerät**

(30) Priorität: 24.09.1998 DE 19843896
(71) Anmelder: SIEMENS AKTIENGESELLSCHAFT, 80333 München (DE)
(72) Erfinder: Brune, Georg, Dr., 58675 Hemer (DE)

(57) **Zusammenfassung**

Die ausschließlich über eine zweiadrige Anschlußleitung (ASL) an das Kommunikationssystem (KS) angeschlossene Türsprecheinrichtung (TS), insbesondere der ihr zugehörige Türsprechverstärker (SV) ist nicht ständig aktiviert, sondern wird nur bei Bedarf wirksam an die externe Spannungsquelle (SQu) angeschaltet. Diese wirksame An- bzw. die Abschaltung erfolgt durch die systemseitig in der Teilnehmerschnittstelle vorgenommene Umpolung der Speisespannung. Damit ergibt sich für die Steuerung des Türsprechverstärkers ein eindeutiges und nicht störanfälliges Kriterium, das türsprechstellenseitig sehr einfach zu detektieren ist. Über die zweiadrige Anschlußleitung werden alle für die übrigen Funktionen einer solchen Gesprächseinrichtung notwendigen Steuerinformationen übermittelt. Die Umsetzung der türsprechstellenseitigen Kriterien auf die Kriterien der Teilnehmerschnittstelle erfolgt in einer der Türsprecheinrichtung räumlich unmittelbar zugeordneten oder mit ihr zusammengefaßten Adaptereinheit (AE).

## Beschreibung

Die Erfindung betrifft ein Telekommunikationssystem mit einer speicherprogrammierten Systemsteuerung, in deren Speichereinheit jeweils Informationen über die jeweilige Anschlußart daran angeschlossener und wahlweise miteinander bzw. mit einer Amtsleitung zu verbindenden Endgeräte und der aktuelle Zustand einspeicherbar ist. Mindestens eines der angeschlossenen Fernsprechendgeräte ist als Türsprecheinrichtung ausgebildet und an der betreffenden Anschlußleitung angeschlossen, über die zumindest die Anschaltung des Türsprechverstärkers, - der von einer vom System unabhängigen externen Speisespannungsquelle gespeist wird,- beeinflußbar ist. Eine Verbindungsanforderung wird von der Türsprecheinrichtung aus zum System übermittelt.

An ein Telekommunikationssystem, insbesondere ein sogenanntes privates Kommunikationssystem sind je nach seinem Komplexitätsgrad Endgeräte mit vielfältigen Leistungsmerkmalen anschließbar. Das zugrundeliegende Kommunikationssystem besteht im Prinzip aus einer Vielzahl von vermittlungstechnischen Funktionseinheiten und einem programmierbaren digitalen Rechnersystem, das diese Funktionseinheiten steuert und alle vermittlungstechnischen Abläufe überwacht. Dazu ist es erforderlich, dass das Rechnersystem mit Informationen über den Betriebszustand der Funktionseinheiten und über Zustandsänderungen, insbesondere über Eingaben an den anschlossenen Endgeräten informiert wird. Für die Steuerung der erforderlichen Abläufe greift der Systemprozessor auf Informationen zurück, die in den entsprechenden Speichereinheiten abgespeichert sind.

Insbesondere für sogenannte kleine bzw. mittlere Telekommunikationssysteme ist es bekannt, mindestens ein daran angeschlossenes Endgerät als eine Türsprecheinrichtung auszubilden, zu dem bedarfsweise vermittels eines normalen internen Fernsprechendgerätes eines Sprechverbindung schaltbar und eine zugehörige Türschließvorrichtung im Sinne einer Türöffnung zu betätigen ist. Der Anschluß einer solchen Türsprecheinrichtung kann über eine analoge, ggf. eine digitale Teilnehmerschnittstelle erfolgen. Üblicherweise gelten für derartige Türsprecheinrichtungen gewisse Funktionseinschränkungen gegenüber den anderen gleichfalls an das System angeschlossenen Fernsprechendgeräten. Um für die Einschaltung des zur Türsprecheinrichtung gehörigen Türsprechverstärkers einen Dauerbetrieb zu vermeiden, der hinsichtlich der Energiebilanz ungünstig ist und der im Allgemeinen Funktionsstörungen zur Folge hat, ist es bekannt, diesen Türsprechverstärker nur im Bedarfsfalle wirksam zu schalten. Zu der hierzu notwendigen Anschaltung des Sprechverstärkers an die Speisespannungsquelle dient als Kriterium das Auftreten von Sprachsignalen und anderen Wechselspannungsanteilen an der betreffenden Anschlußleitung. Die automatische Wirksamschaltung des Türsprechverstärkers aufgrund dieses Kriteriums ist jedoch problembehaftet. Um ein rasches Wirksamschalten immer dann zu ermöglichen, wenn derartige Wechselspannungssignale auf der Leitung auftreten, ist die zugehörige Indikatorschaltung äußerst empfindlich auszulegen. Das bedeutet wiederum, dass neben dem Erkennen von aktiv bewirkten Leitungssignalen auch eine andersartige Beeinflussung, z. B. durch Umweltgeräusche erfolgt. Zur Erkennung des Gesprächsendes ist eine bestimmte Nachlaufzeit erforderlich und es kann ggf. ein unkontrolliertes Wirksamschalten erfolgen. Es ist auch eine Störungsmöglichkeit durch elektromagnetische Einstrahlung gegeben. Aufgrund einer Fehlanpassung könnten Pfeifgeräusche bei nichtgeschaltetem Sprechweg entstehen.

Es ist die Aufgabe der Erfindung im Zusammenhang mit der Steuerung des Türsprechverstärkers einer Türsprecheinrichtung die Verhältnisse zu verbessern. Diese Aufgabe wird durch die Merkmale des Anspruches 1 gelöst. Bevorzugte Ausführungsformen der Erfindung sind Gegenstand der Unteransprüche. Das Wesentliche der Erfindung besteht darin, dass nach einer von der Türsprecheinrichtung ausgehenden Verbindungsanforderung aufgrund der vorgenommenen Durchschaltung des Koppelweges zur Verbindung eines Fernsprechendgerätes mit der Türsprecheinrichtung ein Startkriterium abgeleitet wird, das einen Wechsel der Polarität auf den Adern der betreffenden Anschlußleitung bewirkt. Dieser Wechsel wird türsprecheinrichtungsseitig registriert und als Folge davon wird die Aktivierung des Türsprechverstärkers bewirkt. Beim Auslösen der bestehenden Verbindung wird ein Endekriterium abgeleitet, das die Rückschaltung auf die ursprüngliche Polarität an der Anschlußleitung bewirkt, wodurch dann unmittelbar die Unwirksamschaltung des Türsprechverstärkers vorgenommen wird. Es wird also als Kriterium ein störunempfindliches, eindeutiges und stabiles Kriterium verwendet. Dieses ist äußerst einfach zu detektieren und kann somit unmittelbar zur Steuerung des Türsprechverstärkers umgesetzt werden. Im Gegensatz zu einer Spracherkennungsanordnung ist die Auswertung dieses Kriteriums wesentlich einfacher und damit auch preiswerter zu realisieren. Bei dieser Nutzung eines stabilen Kriteriums kann die 2-Draht-Schnittstelle vom System zur Türsprecheinrichtung beibehalten werden. Ohne Nachlaufzeit kann der Türsprechverstärker gezielt durch die Software beim internen Verbindungsabbau ausgeschaltet werden.

Gemäß Anspruch 2 dienen als Start- und Endekriterien diejenigen Befehle, die für die jeweiligen analogen oder digitalen Koppelbausteine generiert werden, um entweder eine Verbindungsdurchschaltung oder die Verbindungsauftrennung zu bewirken. Durch diese eindeutig definierten Zeitpunkte zu denen die externe Speisespannungsquelle für den Sprechverstärker hinzu- oder weggeschaltet wird, werden Fehlfunktionen vermieden. Gemäß einer weiteren Ausbildung der Erfindung werden über die Anschlußleitung neben der Sprachübermittlung sämtliche Steuerungsinformationen für die im Zusammenhang mit der Türsprecheinrichtung stehenden Funktionen übertragen.

Gemäß einer Weiterbildung der Erfindung werden die Funktionen durch eine vorhandene Adaptereinheit, die der Türsprecheinrichtung örtlich zugeordnet ist, realisiert und diese Adaptereinheit ist eingangsseitig ausschließlich über die zweiadrige Anschlussleitung mit dem Kommunikationssystem verbunden und weist ausgangsseitig die funktionsorientierten Steuerleitungen auf. Es erfolgt grundsätzlich eine beidseitige Umsetzung der Kriterien an der Türsprecheinrichtung, auf die für die Teilnehmerschnittstelle des Systems maßgebenden Kriterien.

Weitere vorteilhafte Ausgestaltungen der Erfindung sind den restlichen Unteransprüchen 6 bis 10 zu entnehmen.

Im Folgenden wird die Erfindung im Hinblick auf die an das Telekommunikationssystem angeschlossene Türsprecheinrichtung anhand eines vereinfachten Blockschaltbildes näher erläutert.

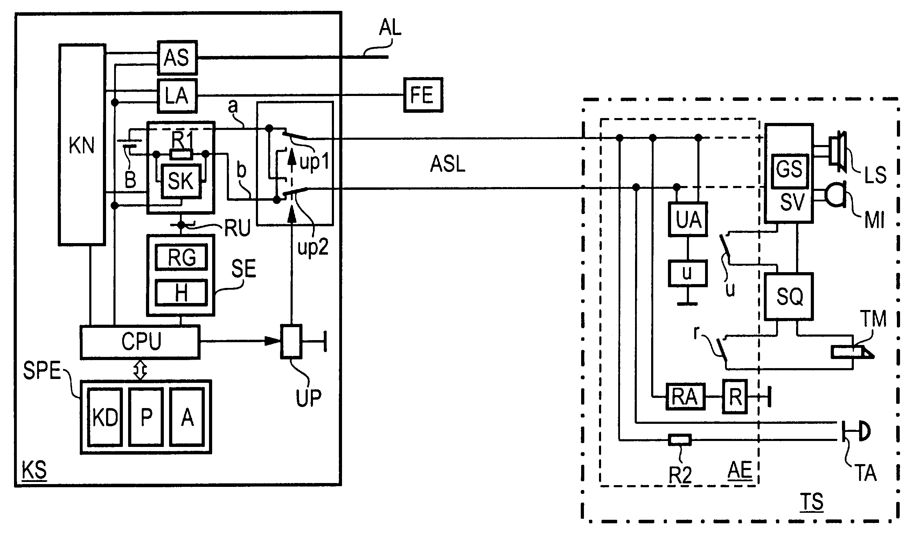

Das Telekommunikationssystem KS kann beispielsweise ein sogenanntes kleines oder mittleres Nebenstellenkommunikationssystem darstellen, an das eine Mehrzahl von Endgeräten, wie Fernsprechendgeräte, anschließbar ist. Stellvertretend für die Fernsprechendgeräte ist in der Figur lediglich das Endgerät FE und die ein Sonderendgerät darstellende Türfreisprecheinrichtung TS angedeutet. Das Telekommunikationssystem kann mit dem öffentlichen Kommunikationssystem über mindestens eine Amtsleitung AL oder auch mit anderen Telekommunikationssystemen verbunden sein. Als Schnittstelleneinrichtungen zu den Endgeräten, die auch Telefaxgeräte oder Datenverarbeitungsgeräte darstellen können, sind in Abhängigkeit von der jeweiligen Art der angeschlossenen Endgeräte unterschiedliche Anschaltungsbaugruppen vorgesehen. Für die Amtsleitung ist die Einheit AS und für das symbolisch dargestellte Fernsprechendgerät FE die Einheit LA gezeigt. Durch diese Einheiten werden grundsätzlich unter anderem unterschiedliche Signalisierungsinformationen von den Endgeräten oder den Netzen auf das innerhalb des Telekommunikationssystems KS einheitlich verwendetes Format umgewandelt. Eine weitere wesentliche Einheit bildet die Koppeleinrichtung KN, die die Sprechverbindungen zwischen den Endgeräten untereinander oder zwischen den Endgeräten und den erreichbaren Telekommunikationsnetzen durchschaltet. Sie kann grundsätzlich analoge Koppelbausteine bzw. auf die digitale Durchschaltung abgestimmte Koppelbausteine aufweisen. Die vorhandene zentrale Signaleinrichtung SE enthält z. B. das für die Erzeugung der Hörtöne vorgesehene Modul H und den für die Erzeugung der Rufspannung zuständigen Ruftongenerator RG. Die von ihm gelieferten Rufsignale werden über eine gemeinsame Rufleitung den anschaltbaren Einheiten LA zugeführt und an die jeweilige Anschlußleitung wirksam angelegt. Dies erfolgt durch Schaltmittel, die jeweils durch eine vorgegebene Rufprozedur gesteuert werden.

Sämtliche modularen Einheiten sind mit einer zentralen Steuereinheit verbunden. Diese besteht aus der Systemsteuerung CPU und der Speichereinrichtung SPE. Diese Speichereinrichtung gliedert sich grundsätzlich in einen Programmspeicher P, einem Arbeitsspeicher A und ggf. als Teil dieses Arbeitsspeichers in einem Kundendatenspeicher KD. Im Programmspeicher P ist unter anderem das Anlagenbetriebsprogramm abgespeichert und im Speicherteil KD sind die Kundendaten, z. B. die den einzelnen Kommunikationsendgeräten zugeteilten Berechtigungen abgelegt. Ausserdem sind darin weitere Besonderheiten der angeschlossenen Endgeräte gespeichert. Der Arbeitsspeicher A dient unter anderem der Aufnahme von temporären Daten zur Programmablaufsteuerung. Durch die Systemsteuerung CPU werden die Funktionen der einzelnen Einheiten überwacht, diese Einheiten werden zur Ausführung ihrer spezifischen Funktionsabläufe angereizt, und es werden von diesen Einheiten Daten entgegen genommen.

Als Teilnehmer ist über eine zweiadrige Anschlussleitung ASL mindestens eine als Sonderendgerät anzusehende Türsprecheinrichtung TS anzuschließen. Sie kann als Freisprecheinrichtung ausgebildet sein, und sie enthält u. a. einen Türsprechverstärker SV, der auch die durch die Einheit GS angedeutete Gabelschaltung beinhaltet. Der Türsprechverstärker ist in bekannter Weise mit einem ein Mikrofon MI enthaltenden Mikrofonkreis und mit einem einen Lautsprecher LS enthaltenden Lautsprecherkreis verbunden. Wird die der Türsprecheinrichtung TS räumlich unmittelbar zugeordnete Taste TA von einer Person, die zunächst über diese Türsprecheinrichtung kommunizieren will, betätigt, dann fließt in der entsprechenden Teilnehmeranschlussleitung ASL ein Schleifenstrom. Dessen Wert soll im Wesentlichen durch den Abschlusswiderstand R2 bestimmt sein. Dieser Widerstand entspricht dem beim Anschluss eines normalen Fernsprechendgerätes auftretenden Leitungsabschlusswiderstand. Die Speisung für diese Anschlussleitung erfolgt innerhalb des Kommunikationssystems KS und wird durch die dargestellte Batterie B symbolisiert. Am Widerstand R1 der Schnittstellenschaltung für diese jeweilige Anschlussleitung entsteht ein Spannungsabfall, der die entsprechende Indikationsschaltung SK ansprechen lässt. Durch diese Indikationsschaltung wird im System der jeweilige Leitungszustand signalisiert. Die Ausgangsinformationen dieser Indikationsschaltung SK werden innerhalb eines bestimmten Abfragezyklusses durch die Systemsteuerung CPU abgefragt. Damit ist in gleicher Weise wie für die übrigen Anschlussleitungen eine Zustandsänderung feststellbar, wodurch dann gleichzeitig die Identifizierung des betreffenden Anschlusses eingeleitet wird. Damit ist dann das betreffende Endgerät bekannt, so dass durch die Systemsteuerung, auf die diesbezüglich im Kundendatenspeicher KD der Speichereinrichtung SPE für dieses jeweilige Endgerät enthaltenen Informationen zurückgegriffen werden kann.

Im Falle der Türsprecheinrichtung TS muss durch die Programmsteuerung die mit der Betätigung der Taste TA bewirkte kurzzeitige Aktivierung des Schleifenstromes jedoch zu anderen Abläufen führen, als dies bei einem normalen Fernsprechendgerät der Fall wäre. Das Loslassen der Taste TA führt nicht zur Auslösung der Leitung, sondern es ist sichergestellt, dass durch die Systemsteuerung eine optische und/oder akustische Rufsignalisierung zu mindestens einem im Kundendatenspeicher KD definierten Endgerät, beispielsweise dem Endgerät FE veranlasst wird. Beim Melden der gerufenen Teilnehmerstelle wird eine Sprechverbindung zur Türsprecheinrichtung hergestellt. Dies kann durch die Betätigung einer Funktionstaste an dem betreffenden Endgerät oder auch durch die Eingabe einer charakteristischen Ziffernkombination und/oder durch die Eingabe eines bestimmten Steuerzeichencodes durch den jeweiligen Teilnehmer erfolgen. Mit der Durchschaltung des internen Koppelweges durch die Koppeleinrichtung KN wird auf Grund des dabei für den betreffenden Koppelbaustein generierten Befehls ein Startkriterium für die Wirksamschaltung des in der Türsprecheinrichtung vorhandenen Türsprechverstärkers SV erzeugt. Unter der Voraussetzung eines analog gesteuerten Kommunikationssystems ist der dieses Startkriterium auslösende Befehl derjenige, der zur wirksamen Durchschaltung des betreffenden Transistor-Koppelpunktes dient.

Bei einem digital orientierten Koppelfeld dient für die Bereitstellung des Startkriteriums derjenige Befehl mit dem im zugeordneten Verbindungsspeicher, die miteinander über bestimmte Zeitschlitze zu verknüpfende B-Kanäle festgelegt sind. Auf Grund eines derartigen durch die Software beim internen Verbindungsaufbau generierten Befehls wird eine Schalteinrichtung aktiviert, die unmittelbar die Umschaltung der Polarität auf der Anschlussleitung ASL bewirkt. Im vereinfachten Blockschaltbild der Figur wird diese Umschaltung durch die Umschaltekontakte up1 und up2 veranschaulicht. Diese Kontakte sind dem Relais UP zugehörig, das auf Grund eines der genannten Befehle bei der Schaltung des Koppelweges durch die Programmsteuerung CPU wirksam geschaltet wird. Diese durch die Kontakte dieses Relais symbolisierte Umschaltung kann auch durch eine entsprechend angesteuerte elektronische Einheit durchgeführt werden. Diese Polaritätsumkehr wird türsprecheinrichtungsseitig durch eine entsprechende Erkennungsanordnung UA detektiert. Diese Erkennungsanordnung ist in gleicher Weise wie die Einheiten RS und die Relais U und R mit ihren zugehörigen Kontakten Teil einer Adapterschaltung AE, die beispielsweise eine Teileinheit der Türsprecheinrichtung TS bildet. Sie kann dieser unmittelbar räumlich zugeordnet sein oder in ihr integriert sein. Die als Erkennungseinheit für den vorgenommenen Polaritätswechsel an die Leitung angeschlossene Einheit UA kann wegen des auftretenden stabilen und störungsfrei dargebotenen Kriteriums in Form des Polaritätswechsel äußerst einfach ausgeführt sein. Grundsätzlich könnte sie durch ein Relais realisiert sein, das mit dem auf der Leitung bei einem Polaritätswechsel auftretenden Zustand aktiviert wird und bei Rückkehr in den ursprünglichen Polaritätszustand wieder abfällt. Es ist auch eine mit diesen Funktionen ausgestattete elektronische Lösung möglich. Bei dem mit dem vorgenommenen Polaritätswechsel erfolgenden Ansprechen der Einheit UA soll durch ein entsprechendes Ausgangssignal eine Schalteinheit im Ausführungsbeispiel durch ein Relais U dargestellt, aktiviert werden. Das zugehörige Kontaktelement, im Ausführungsbeispiel der Kontakt u, geht in die Arbeitslage, wodurch für den Türsprechverstärker SV die wirksame Anschaltung der externen Speisespannungsquelle SQ zur Spannungsversorgung des Türsprechverstärkers SV erfolgt. Bei Gesprächsende wird diese Anschaltung der Versorgungsspannung durch die Software des Kommunikationssystems rückgängig gemacht. Dies erfolgt entweder auf Grund des Befehls, der bei einem analogen Koppelfeld zur Freigabe des betreffenden Koppelpunktes führt, oder bei einer digitalen Koppeleinrichtung mit demjenigen Befehl, durch den vorab genannte Eintrag im Verbindungsspeicher zurückgenommen wird. Bei dieser Löschung der vorhandenen Zuordnung der B-Kanäle oder bei der Freigabe des Koppelpunktes wird durch die Programmsteuerung CPU die Deaktivierung der Schalteinheit UP veranlasst. Im Falle eines Relais fällt dieses also ab, und ihre Kontakte up1 und up2 nehmen ihre ursprüngliche Ruhestellung wieder ein. Das bedeutet, dass an der Anschlussleitung ASL die ursprüngliche Polarität erneut anliegt. Dies wird in der Indikatoreinheit UA erkannt. Dadurch wird das Relais U oder eine äqualente Einrichtung deaktiviert, so dass über einen entsprechenden Schaltbefehl bzw. dem Abfall des Kontaktes u die Spannungsversorgung für den Türsprechverstärker SV entfällt. Die Steuerung der Spannungsversorgung für den Türsprechverstärker, die Signalisierung, dass eine Person an der Türsprecheinrichtung anwesend ist, als auch die Sprechverbindung selbst, erfolgt unter ausschließlicher Verwendung der zweiadrigen Anschlussleitung ASL. Über diese Leitung kann auch die in üblicher Weise im Zusammenhang mit einer solchen Türsprecheinrichtung vorgesehene Betätigung einer zugehörigen Türschließvorrichtung im Sinne einer Türöffnung vorgenommen werden. Die hierzu notwendige Signalisierung kann beispielsweise durch die Betätigung einer bestimmten an dem Endgerät vorhandenen Funktionstaste über diese Anschlussleitung erfolgen. Als Kriterium hierfür kann beispielsweise eine Rufwechselspannung an diese Leitung angelegt werden. Diese in der betreffenden Schnittstelleneinheit des Systems angelegte Wechselspannung wird zum Beispiel in der Adaptereinheit durch die entsprechende Auswerteeinheit RA detektiert. Wird eine solche Rufwechselspannung erkannt, dann wird durch diese Einheit RA die Betätigung des Relais R veranlasst. In nicht dargestellter Weise kann durch einen Kontakt des Relais der Sprechweg geöffnet werden, damit auf Grund der angelegten Rufwechselspannungssignale keine dadurch ausgelösten störenden Geräusche durch den Lautsprecher LA abgegeben werden. Mit dem Kontakt r wird ein Ansprechkreis für den Türöffnermagnet TM geschlossen, der gleichfalls durch die Spannungsquelle SQ gespeist wird. Diese Spannungsquelle SQ kann als ein dem Türsprechverstärker zugeordnetes Steckernetzteil ausgebildet sein. Das Relais R und seine ihm zugehörigen Kontaktfunktionen können auch durch eine elektronische Einheit realisiert sein.

## Patentansprüche

1. Telekommunikationssystem mit einer speicherprogrammierten Systemsteuerung, in deren Speichereinheit jeweils Informationen über die jeweilige Anschlussart daran angeschlossener und wahlweise miteinander bzw. mit einer Amtsleitung zu verbindenden Endgeräte und der aktuelle Zustand einspeicherbar ist, wobei zumindest eines der angeschlossenen Fernsprechendgeräte als Türsprecheinrichtung ausgebildet und an der betreffenden Anschlussleitung (ASL) angeschlossen ist, über die zumindest die Anschaltung des Türsprechverstärkers, der von einer vom System unabhängigen externen Speisespannungsquelle gespeist wird, beinflussbar ist und wobei eine Verbindungsanforderung von der Türsprecheinrichtung aus übermittelbar ist,
**dadurch gekennzeichnet,**
dass nach einer Verbindungsanforderung aufgrund der vorgenommenen Durchschaltung des Koppelweges für die Verbindung zwischen einem angeschlossenen Fernsprechendgerät und der Türsprecheinrichtung (TS) ein Startkriterium abgeleitet wird, das einen Wechsel der Polarität auf den Adern der Anschlussleitung (ASL) bewirkt, dass dieser Wechsel türsprecheinrichtungsseitig festgestellt wird und dadurch die unmittelbare Wirksamschaltung des Türsprechverstärkers (SV) erfolgt, dass beim Auslösen der bestehenden Verbindung ein Endekriterium abgeleitet wird, das die Rückschaltung auf die ursprüngliche Polarität bewirkt und dass dadurch die Unwirksamschaltung des Türsprechverstärkers vorgenommen wird.

2. Telekommunikationssystem nach Anspruch 1,
**dadurch gekennzeichnet,**
dass als Start- und Endekriterien diejenigen Befehle dienen, die zur entweder eine Verbindungsdurchschaltung oder die Verbindungsauftrennung bewirkenden Steuerung der jeweiligen analogen oder digitalen Koppelbausteine generiert werden.

3. Telekommunikationssystem nach Anspruch 1,
**dadurch gekennzeichnet,**
dass die Wirksamschaltung bzw. die Unwirksamschaltung des Sprechverstärkers der Türsprecheinrichtung durch die An- bzw. Abschaltung der externen Speisespannungsquelle (SQ) erfolgt.

4. Telekommunikationssystem nach Anspruch 1,
**dadurch gekennzeichnet,**
dass über die Anschlussleitung neben der Sprachübermittlung sämtliche Steuerungsinformationen für die im Zusammenhang mit der Türsprecheinrichtung stehenden Funktionen übertragen werden.

5. Telekommunikationssystem nach Anspruch 4,
**dadurch gekennzeichnet,**
dass eine der Türsprecheinrichtung örtliche zugeordnete Adaptereinheit (AE) vorhanden ist, die eingangsseitig ausschließlich über die zweiadrige Anschlussleitung (ASL) mit dem Kommunikationssystem (KS) verbunden ist und die ausgangsseitig die funktionsorientierten Steuerleitungen aufweist und die jeweils die zugeordneten Steuerinformationen zur Realisierung der einzelnen Funktionen liefert, so dass grundsätzlich eine beidseitige Umsetzung der Kriterien an der Türsprecheinrichtung auf die für die Teilnehmerschnittstelle des Systems maßgebenden Kriterien erfolgt.

6. Telekommunikationssystem nach Anspruch 5,
**dadurch gekennzeichnet,**
dass die Funktionen der Adaptereinheit in der Schaltung des Sprechweges zur Türsprecheinrichtung, der Erkennung des Wechsels der Polarität an der Anschlussleitung und der An- bzw. Abschaltung der Versorgungsspannung für den Türsprechverstärker, der Türklingelsignalisierung, in der Generierung eines Freigabesignals für den Türverriegelungsmechanismus, und in der galvanischen Trennung des Mikrophon- bzw. Hörerkreises von der Anschlussleitung bestehen.

7. Telekommunikationssystem nach Anspruch 6,
**dadurch gekennzeichnet,**
dass die Türklingelsignalisierung durch die Betätigung eines manuell betätigbaren Kontaktelementes (TA) vermittels einer entsprechenden Indikation an der Leitungsschnittstelle eine Rufanforderung an mindestens eine vorab festgelegte Endeinrichtung (FE) durch die Systemsteuerung bewirkt.

8. Telekommunikationssystem nach Anspruch 6,
**dadurch gekennzeichnet,**
dass das zur Beeinflussung des Türöffnungsmechanismus verwendete Signal das Rufspannungssignal darstellt, das aufgrund einer am mit der Türsprecheinrichtung (TS) verbundenen Endgerät erfolgten und durch die Systemsteuerung ausgewerteten Informationseingabe angelegt wird.

9. Telekommunikationssystem nach Anspruch 8,
**dadurch gekennzeichnet,**
dass das Rufspannungssignal in der Adaptereinheit (AE) in der Weise ausgewertet wird, dass der Ansprechkreis für ein zur Freigabe des Türschließmechanismus dienendes Element (TM) geschlossen wird.

10. Telekommunikationssystem nach einem der vorhergehenden Ansprüche,
**dadurch gekennzeichnet,**
dass die Türsprecheinrichtung als ein Endgerät ausgebildet ist, das vermittels seines mit dem Sprechverstärker gekoppelten Mikrophon- und Lautsprecherkreises die Türfreisprechstellen-Funktion ermöglicht und mit der Adaptereinheit eine örtlich unmittelbar zusammengefasste bzw. integrierte Gesamteinheit (TS) bildet.
